(19)

**Europäisches Patentamt**
**European Patent Office**
**Office européen des brevets**

(11) **EP 1 471 234 B1**

(12) **EUROPÄISCHE PATENTSCHRIFT**

(45) Veröffentlichungstag und Bekanntmachung des Hinweises auf die Patenterteilung:
**28.05.2008 Patentblatt 2008/22**

(51) Int Cl.:
*F02D 41/00* (2006.01)   *F02D 41/10* (2006.01)
*F02B 37/12* (2006.01)

(21) Anmeldenummer: **04003718.6**

(22) Anmeldetag: **19.02.2004**

(54) **Verfahren und Vorrichtung zum Betreiben einer Brennkraftmaschine**

Method and device for operating an internal combustion engine

Procédé et dispositif pour faire fonctionner un moteur à combustion interne

(84) Benannte Vertragsstaaten:
**DE FR IT SE**

(30) Priorität: **23.04.2003 DE 10318243**

(43) Veröffentlichungstag der Anmeldung:
**27.10.2004 Patentblatt 2004/44**

(73) Patentinhaber: **ROBERT BOSCH GMBH**
**70442 Stuttgart (DE)**

(72) Erfinder:
• **Wegener Sabine**
 **71679 Asperg (DE)**

• **Wild, Ernst**
 **71739 Oberriexingen (DE)**

(56) Entgegenhaltungen:
**EP-A- 0 870 914      EP-A- 1 178 192**
**WO-A-02/04799**

• **WATSON N., JANOTA M.S.: "Turbocharging the Internal Combustion Engine" 1982, , GB , XP002382683 * Seite 165 - Seite 166 * * Seite 184 - Seite 189 ***
• **PATENT ABSTRACTS OF JAPAN Bd. 010, Nr. 311 (M-528), 23. Oktober 1986 (1986-10-23) & JP 61 123717 A (MITSUBISHI MOTORS CORP), 11. Juni 1986 (1986-06-11)**

EP 1 471 234 B1

**Beschreibung**

Stand der Technik

Die Erfindung geht von einem Verfahren und von einer Vorrichtung zum Betreiben einer Brennkraftmaschine nach der Gattung der unabhängigen Ansprüche aus.

Es sind bereits Verfahren und Vorrichtungen zum Betreiben einer Brennkraftmaschine bekannt, bei denen ein Abgasturbolader zur Verdichtung der der Brennkraftmaschine zugeführten Luft vorgesehen ist. Dabei wird eine Antriebsleistung einer Turbine des Abgasturboladers in einem Abgasstrang der Brennkraftmaschine durch Variation einer Turbinengeometrie verändert. Man spricht in diesem Zusammenhang auch von einem Abgasturbolader mit variabler Turbinengeometrie. Dabei trifft das über die Turbine fließende Abgas auf Leitschaufeln, die verstellbar sind und damit den Turbinenwirkungsgrad verändern können. Wenn die Brennkraftmaschine ein Fahrzeug antreibt, werden die Leitschaufeln beim Beschleunigen des Fahrzeugs so verstellt, dass sich eine kleine effektive Öffnungsquerschnittsfläche der Turbine ergibt, die den Abgasgegendruck vor der Turbine und die Fließgeschwindigkeit des Abgases ansteigen lässt. Wenn die wirksame Öffnungsquerschnittsfläche zu stark verringert wird, dann steigt der Abgasgegendruck auf Werte, bei denen die Strömungsgeschwindigkeit des Abgases die Schallgeschwindigkeit erreicht und nicht mehr zu steigern ist. Wegen der kleineren effektiven Öffnungsquerschnittsfläche sinkt der Turbinenwirkungsgrad wieder. Die Verringerung der effektiven Öffnungsquerschnittsfläche muss deshalb beim Beschleunigen des Fahrzeugs auf einen Mindestwert begrenzt werden, sonst wird die maximal mögliche Beschleunigung des Fahrzeugs nicht erreicht. Die Festlegung der Stellung der Leitschaufeln der Turbine, zu der der Mindestwert für die effektive Öffnungsquerschnittsfläche gehört, ist mit einem hohen Applikationsaufwand verbunden.

Aus der WO 02/04799 A1 ist es bekannt, zur genauen Regelung des Ladedrucks in einer Brennkraftmaschine mit einem Abgasturbolader die Leistung oder das Drehmoment der Turbine aus den Leistungen oder Drehmomenten des Verdichters und des Verlustes an der Welle zu bestimmen und abhängig von der Leistung oder dem Drehmoment der Turbine die Sollwertvorgabe für die Stellgröße zur Einstellung des Ladedrucks zu ermitteln.

Aus der EP 1178 112 A2 ist eine Vorrichtung zur Steuerung des Ladedrucks bei einer Brennkraftmaschine bekannt, wobei eine minimale Öffnung einer variablen Turbinengeometrie abhängig von der Motordrehzahl bestimmt wird.

Vorteile der Erfindung

Das erfindungsgemäße Verfahren und die erfindungsgemäße Vorrichtung zum Betreiben einer Brennkraftmaschine mit den Merkmalen der unabhängigen Ansprüche haben demgegenüber den Vorteil, dass ein Druckverhältnis zwischen einem Druck in Strömungsrichtung des Abgases im Abgasstrang nach der Turbine und einem Druck in Strömungsrichtung des Abgases im Abgasstrang vor der Turbine vorgegeben wird und dass in Abhängigkeit dieses Druckverhältnisses ein Grenzwert für eine Stellgröße eines Stellgliedes zur Einstellung der Turbinengeometrie ermittelt wird. Auf diese Weise lässt sich die effektive Öffnungsquerschnittsfläche der Turbine mit erheblich geringerem Applikationsaufwand auf einen Mindestwert begrenzen und damit das Erreichen einer maximal möglichen Beschleunigung eines von der Brennkraftmaschine angetriebenen Fahrzeugs sicherstellen.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn das Druckverhältnis derart vorgegeben wird, dass eine maximale Beschleunigung eines von der Brennkraftmaschine angetriebenen Fahrzeugs erreicht wird. Auf diese Weise kann die Begrenzung der effektiven Öffnungsquerschnittsfläche in einfacher Weise durch geeignete Vorgabe des Druckverhältnisses erreicht werden, wobei gleichzeitig das Erreichen der maximal möglichen Beschleunigung des Fahrzeugs sichergestellt ist.

Ein weiterer Vorteil ergibt sich, wenn das Druckverhältnis derart vorgegeben wird, dass ein optimaler Wirkungsgrad der Turbine erreicht wird. Auch auf diese Weise lässt sich die Begrenzung der effektiven Öffnungsquerschnittsfläche in einfacher Weise durch geeignete Vorgabe des Druckverhältnisses erreichen und die Umsetzung der maximal möglichen Beschleunigung des Fahrzeugs sicherstellen.

Ein weiterer Vorteil ergibt sich, wenn beim Betrieb der Brennkraftmaschine der Grenzwert für die Stellgröße nicht in Richtung zu kleineren effektiven Öffnungsquerschnittsflächen der Turbine überschritten wird. Auf diese Weise wird verhindert, dass der optimale Wirkungsgrad der Turbine nicht erreicht werden kann.

Vorteilhaft ist weiterhin, wenn der Grenzwert für die Stellung des Stellgliedes aus dem Abgasmassenstrom durch die Turbine mittels einer invertierten und auf Normbedingungen bezogenen Durchflusskennlinie ermittelt wird. Auf diese Weise lässt sich der Grenzwert mit Hilfe der wirklichen physikalischen Abhängigkeiten und damit unter allen Betriebsbedingungen der Brennkraftmaschine weitestgehend korrekt ermitteln, sodass unter allen Betriebsbedingungen der Brennkraftmaschine der optimale Wirkungsgrad der Turbine und damit die maximal mögliche Beschleunigung des Fahrzeugs erreicht werden kann.

Vorteilhaft ist weiterhin, wenn die aktuellen Bedingungen für Druck, Temperatur und/oder Strömungsgeschwindigkeit durch jeweils einen Korrekturfaktor berücksichtigt werden. Auf diese Weise lassen sich trotz der auf die Normbedingungen bezogenen Durchflusskennlinie die aktuellen Bedingungen auf einfache Weise berücksichtigen.

Zeichnung

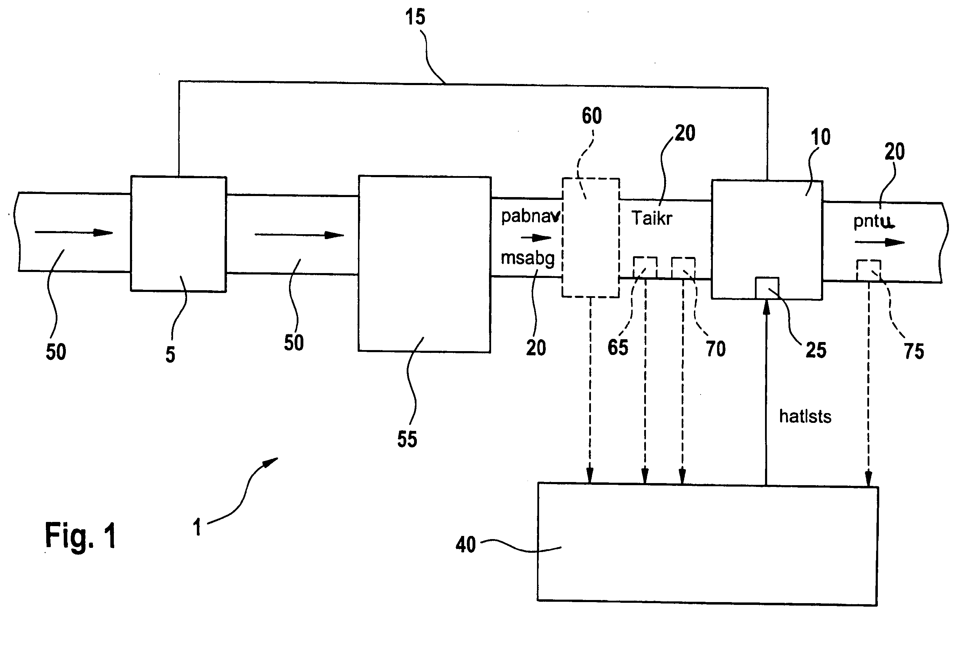

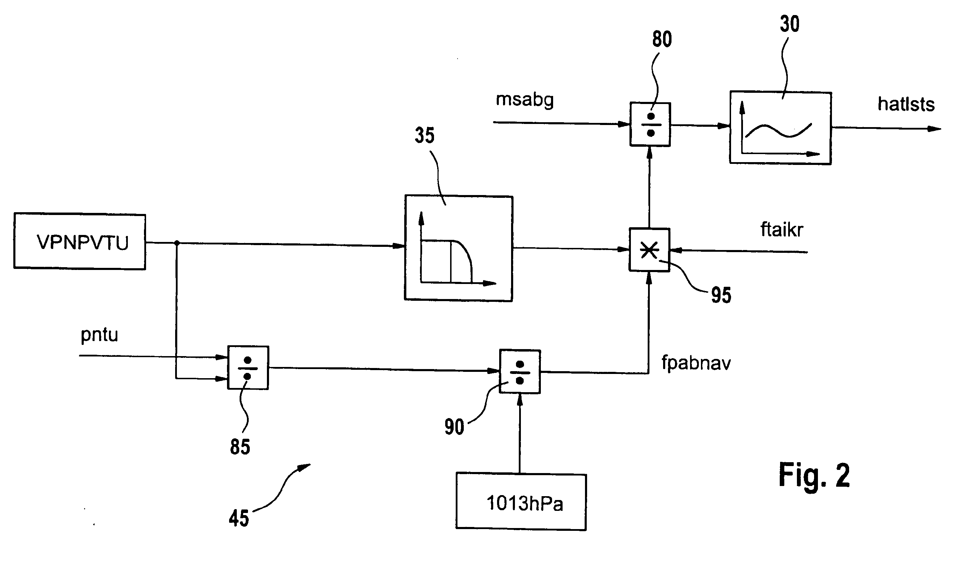

Ein Ausführungsbeispiel der Erfindung ist in der Zeichnung dargestellt und in der nachfolgenden Beschreibung näher erläutert. Es zeigen Figur 1 eine schematische Ansicht einer Brennkraftmaschine und Figur 2 ein Funktionsdiagramm zur Erläuterung des erfindungsgemäßen Verfahrens und der erfindungsgemäßen Vorrichtung.

Beschreibung des Ausführungsbeispiels

In Figur 1 kennzeichnet 1 eine Brennkraftmaschine, die in diesem Beispiel ein Fahrzeug antreiben soll. Die Brennkraftmaschine 1 umfasst einen Verbrennungsmotor 55, der beispielsweise als Ottomotor oder als Dieselmotor ausgebildet sein kann. Dem Verbrennungsmotor 55 ist über eine Luftzufuhr 50 Frischluft in Pfeilrichtung zugeführt. Dabei ist in der Luftzufuhr 50 ein Verdichter 5 zur Verdichtung der dem Verbrennungsmotor 55 zugeführten Frischluft angeordnet. Der Verdichter 5 ist in diesem Beispiel der Lader eines Abgasturboladers. Er wird über eine Welle 15 von einer Turbine 10 in einem Abgasstrang 20 der Brennkraftmaschine 1 angetrieben. Der Lader 5, die Welle 15 und die Turbine 10 bilden den Abgasturbolader. Die Turbine 10 wird von einem Abgasmassestrom msabg im Abgasstrang 20 angetrieben. Die Strömungsrichtung des Abgases und damit des Abgasmassenstromes msabg ist in Figur 1 ebenfalls durch Pfeile gekennzeichnet. In Strömungsrichtung des Abgases herrscht im Abgasstrang 20 vor der Turbine 10 ein erster Druck pabnav und eine Abgastemperatur Taikr. In Strömungsrichtung des Abgases herrscht in Abgasstrang 20 nach der Turbine 10 ein zweiter Druck pntu. Der Abgasmassenstrom msabg kann bspw. mittels eines in Figur 1 gestrichelt dargestellten und optional vorgesehenen Massenstrommessers 60 gemessen werden, wobei der Messwert an eine erfindungsgemäße Vorrichtung 40 weitergeleitet werden kann. Die erfindungsgemäße Vorrichtung 40 kann bspw. software- und/oder hardwaremäßig in einer Motorsteuerung implementiert sein. In diesem Beispiel soll davon ausgegangen werden, dass die Vorrichtung 40 der Motorsteuerung entspricht. Der Abgasmassenstrom msabg kann auch stattdessen in dem Fachmann bekannter Weise modelliert werden. Der erste Druck pabnav kann bspw. mittels eines in Figur 1 gestrichelt dargestellten und optional vorgesehenen ersten Drucksensors 65 gemessen werden, wobei der Messwert an die Motorsteuerung 40 weitergeleitet wird. Alternativ kann der erste Druck pabnav, der dem Abgasgegendruck direkt nach dem oder den in Figur 1 nicht dargestellten Auslassventilen des Verbrennungsmotors 55 entspricht, auch in dem Fachmann bekannter Weise modelliert werden.. Die Abgastemperatur Taikr kann bspw. mittels eines in Figur 1 gestrichelt dargestellten und optional vorgesehenen Temperatursensors 70 gemessen werden, wobei der Messwert an die Motorsteuerung 40 weitergeleitet wird. Alternativ kann die Abgastemperatur Taikr auch in dem Fachmann bekannter Weise modelliert werden. Der zweite Druck pntu kann bspw. mittels eines in Figur 1 gestrichelt dargestellten und optional vorgesehenen zweiten Drucksensors 75 gemessen werden, wobei der Messwert an die Motorsteuerung 40 weitergeleitet wird. Alternativ kann der zweite Druck pntu auch in dem Fachmann bekannter Weise ausgehend von einem Umgebungsdruck unter Berücksichtigung eines gegebenenfalls im Abgasstrang 20 in Strömungsrichtung des Abgases der Turbine 10 nachfolgend angeordneten Katalysators modelliert werden. Zur Umsetzung eines vorgegebenen Sollladedruckes in der Luftzufuhr 50 in Strömungsrichtung der Frischluft dem Lader 5 nachfolgend steuert die Motorsteuerung 40 ein Stellglied 25 der Turbine 10 an. Das Stellglied 25 kann dabei in dem Fachmann bekannter Weise Leitschaufeln der Turbine 10 verstellen und damit den Turbinenwirkungsgrad und die effektive Öffnungsquerschnittsfläche der Turbine 10 verändern. Dies erfolgt über eine Stellgröße, bspw. einen Stellhub des Stellgliedes 25. Zur Umsetzung des vorgegebenen Sollladedruckes gibt die Motorsteuerung 40 ein Sollwert hatlsts für den Stellhub des Stellgliedes 25 vor. Die Leitschaufeln der Turbine 10 werden dann auf Grund des umgesetzten Sollwertes hatlsts des Stellhubes so eingestellt, dass der resultierende Turbinenwirkungsgrad zu dem gewünschten Sollladedruck führt.

Bei gegebenem und bekannten Abgasmassenstrom msabg stellt sich bei einer bestimmten Öffnungsquerschnittsfläche der Turbine 10 abhängig von der Stellung der Leitschaufeln bzw. dem vorgegebenen Sollwert hatlsts für den Stellhub ein bestimmter Wert für den ersten Druck pabnav in Strömungsrichtung des Abgases vor der Turbine 10 ein. Mit kleiner werdendem Druckverhältnis pntu/pabnav zwischen dem zweiten Druck pntu in Strömungsrichtung des Abgases nach der Turbine 10 und dem ersten Druck pabnav steigt die Strömungsgeschwindigkeit des Abgases und erreicht schließlich Schallgeschwindigkeit. Mit steigender Strömungsgeschwindigkeit des Abgases steigt auch die Leistung der Turbine 10. Bei einem Druckverhältnis pntu/pabnav von 0,52 erreicht die Strömungsgeschwindigkeit Schallgeschwindigkeit und ist nicht weiter steigerbar. Steigt der erste Druck pabnav vor der Turbine 10 weiter an und sinkt dabei das Druckverhältnis pntu/pabnav weiter ab, so dominieren andere physikalische Effekte und die Turbinenleistung sinkt ab. Es gibt deshalb ein Druckverhältnis pntu/pabnav, bei dem die Turbinenleistung bei gegebenem Abgasmassenstrom msabg maximal ist. Mit Hilfe der physikalischen Zusammenhänge zwischen dem ersten Druck pabnav, also dem Abgasgegendruck, dem Abgasmassenstrom msabg und einem Istwert hatlst für den Stellhub der Stellgliedes 25 lässt sich ein Grenzwert hatlstg für den Stellhub der Stellgliedes 25 für die maximale Turbinenleistung aus einem vorgegebenen Druckverhältnis pntu/pabnav ermitteln. Im eingeschwungenen Zustand der Brennkraftmaschine 1 gilt:

$$msabg = MSNTU(hatlst) * ftaikr * fpabnav * KLAF(pntu/pabnav) \qquad (1)$$

Dabei ist MSNTU eine Durchflusskennlinie zur Bestimmung des Abgasmassenstromes msabg in Abhängigkeit des Istwertes hatlst für den Stellhub des Stellgliedes 25 unter Normbedingungen, die beispielsweise vom Hersteller der Turbine 10 und des Stellgliedes 25 angegeben werden kann. Die Normbedingungen bestehen dabei in einer Normtemperatur Taikr_norm in Strömungsrichtung des Abgases vor der Turbine 10 von 273 K, einem Normdruck pabnav_norm in Strömungsrichtung des Abgases vor der Turbine 10 von 1013 hPa und einer Normströmungsgeschwindigkeit des durch die Turbine 10 transportierten Abgases gleich der Schallgeschwindigkeit. Ein erster Korrekturfaktor ftaikr berücksichtigt die in der Regel von der Normtemperatur Taikr_norm abweichende Temperatur Taikr in Strömungsrichtung des Abgases vor der Turbine 10 wie folgt:

$$ftaikr = \sqrt{\frac{273K}{Taikr}} \qquad (2)$$

Ein zweiter Korrekturfaktor fpabnav berücksichtigt den in der Regel vom Normdruck pabnav_norm abweichenden ersten Druck pabnav in Strömungsrichtung des Abgases vor der Turbine 10 wie folgt:

$$fpabnav = pabnav/1013hPa \qquad (3)$$

Die dritte Normgröße ist die Strömungsgeschwindigkeit des Abgases. Unter Normbedingungen beträgt sie wie beschrieben die Schallgeschwindigkeit. Dabei ist das Druckverhältnis über der Turbine 10 pntu/pabnav < 0,52 und eine normierte Ausflusskennlinie KLAF liefert als dritter Korrekturfaktor für die Strömungsgeschwindigkeit den Wert 1. Bei größeren Druckverhältnissen pntu/pabnav sinkt die Strömungsgeschwindigkeit und der dritte Korrekturfaktor KLAF für die Strömungsgeschwindigkeit ist kleiner 1. Die normierte Ausflusskennlinie KLAF als dritter Korrekturfaktor ist gemäß Gleichung (1) und in dem Fachmann bekannter Weise eine Funktion des Druckverhältnisses pntu/pabnav über der Turbine 10 und auf die Schallgeschwindigkeit normiert. Auf Kosten der Genauigkeit könnten weniger als die drei Korrekturfaktoren berücksichtigt werden.

Gemäß der obigen Beschreibung wird die Turbine 10 bezüglich ihres Durchströmverhaltens wie eine Blende behandelt. Mit diesem Ansatz ist es möglich, für ein vorgegebenes Druckverhältnis pntu/pabnav und mit in der Motorsteuerung 40 bekannten weil gemessenen oder modellierten Größen wie beispielsweise dem Abgasmassenstrom msabg, dem zweiten Druck pntu und der Abgastemperatur Taikr, den zugehörigen Sollwert hatlsts für den Stellhub der Stellgliedes 25 und damit die zugehörige Stellung der Leitschaufeln zu berechnen. Dies wird nachfolgend hergeleitet:

Ein bestimmtes Druckverhältnis VPNPVTU = pntu/pabnav soll vorgegeben und daraus der zugehörige Sollwert hatlsts für den Stellhub des Stellgliedes 25 berechnet werden. Dies gelingt, wenn man zuerst aus dem vorgegebenen Druckverhältnis VPNPVTU und dem bekannten zweiten Druck pntu den ersten Druck pabnav und daraus den zweiten Korrekturfaktor fpabnav berechnet. Dabei gilt:

$$fpabnav = pntu/(1013 \ hPa * VPNPVTU) \qquad (4)$$

Die übrigen Größen der Gleichung (1) sind wie beschrieben in der Motorsteuerung 40 bekannt. Deshalb kann Gleichung (1) nach dem Sollwert hatlsts für den Stellhub der Stellgliedes 25 aufgelöst werden:

$$hatlsts = INV\_MSNTU(msabg/(fpabnav * ftaikr * KLAF(VPNPVTU))) \tag{5}.$$

Dabei ist INV_MSNTU die invertierte und auf Normbedingungen bezogene Durchflusskennlinie der Turbine 10. Sie stellt die zur auf Normbedingungen bezogene Durchflusskennlinie MSNTU der Turbine 10 inverse Durchflusskennlinie dar. Wird als vorgegebenes Druckverhältnis VPNPVTU beispielsweise der Wert 0,52 gewählt, so erhält man als Sollwert hatlsts für den Stellhub der Stellgliedes 25 den Grenzwert hatlstg, bei dem der optimale Turbinenwirkungsgrad und damit die maximale Turbinenleistung und damit die maximal mögliche Beschleunigung des von der Brennkraftmaschine 1 angetriebenen Fahrzeugs erreicht wird. Auf diese Weise lässt sich das bei Abgasturboladern bekannte verzögerte Beschleunigen, das so genannte Turboloch, minimieren.

In Figur 2 ist ein Funktionsdiagramm für eine in der Motorsteuerung 40 software- und/oder hardwaremäßig implementierte Ermittlungseinheit 45 dargestellt, die zur Ermittlung des Sollwertes hatlsts für den Stellhub der Stellgliedes 25 gemäß Gleichung (5) dient.

Als eine der Eingangsgrößen der Ermittlungseinheit 45 wird der Abgasmassenstrom msabg einem ersten Divisionsglied 80 zugeführt und dort durch den Ausgang eines Multiplikationsgliedes 95 dividiert. Der sich bildende Quotient wird der invertierten und auf Normbedingungen bezogenen Durchflusskennlinie INV_MSNTU der Turbine 10 als Eingangsgröße zugeführt, wobei die invertierte und auf Normbedingungen bezogene Durchflusskennlinie INV_MSNTU in Figur 2 durch das Bezugszeichen 30 gekennzeichnet ist. Als Ausgangsgröße der invertierten und auf Normbedingungen bezogenen Durchflusskennlinie 30 ergibt sich gemäß Gleichung (5) der Sollwert hatlsts für den Stellhub des Stellgliedes 25. In einem zweiten Divisionsglied 85 wird der zweite Druck pntu durch das vorgegebene Druckverhältnis VPNPVTU dividiert. Der so gebildete Quotient wird in einem dritten Divisionsglied 90 durch den Normdruck pabnav_norm in Höhe von 1013 hPa dividiert. Der so gebildete Quotient entspricht dem zweiten Korrekturfaktor fpabnav und wird als eine erste Eingangsgröße dem Multiplikationsglied 95 zugeführt. Das vorgegebene Druckverhältnis VPNPVTU wird außerdem der auf die Schallgeschwindigkeit normierten Ausflusskennlinie KLAF als Eingangsgröße zugeführt, wobei die normierte Ausflusskennlinie KLAF in Figur 2 durch das Bezugszeichen 35 gekennzeichnet ist. Der Ausgang der normierten Ausflusskennlinie 35 entspricht dem dritten Korrekturfaktor und wird als zweite Eingangsgröße dem Multiplikationsglied 95 zugeführt. Als dritte Eingangsgröße wird dem Multiplikationsglied 95 der erste Korrekturfaktor ftaikr zugeführt, der gemäß Gleichung (2) in der Motorsteuerung 40 aus der Abgastemperatur Taikr und der Normtemperatur Taikr_norm = 273K gebildet wird. Die drei Eingangsgrößen des Multiplikationsgliedes 95 werden im Multiplikationsglied 95 miteinander multipliziert. Der Ausgang des Multiplikationsgliedes 95 wird dann dem ersten Divisionsglied 80 zugeführt.

Generell stellt der gemäß dem erfindungsgemäßen Verfahren und der erfindungsgemäßen Vorrichtung ermittelte Sollwert hatlsts für den Stellhub des Stellgliedes 25 immer einen Grenzwert hatlstg dar, der beim Betrieb der Brennkraftmaschine 1 nicht in Richtung zu kleineren effektiven Öffnungsquerschnitten der Turbine 10 überschritten werden soll. Entsprechend soll das zugehörige vorgegebene Druckverhältnis VPNPVTU beim Betrieb der Brennkraftmaschine 1 nicht unterschritten werden. Lediglich für den Fall, dass das vorgegebene Druckverhältnis VPNPVTU = 0,52 gewählt wird, lässt sich der optimale Turbinenwirkungsgrad und damit die maximale Turbineleistung und damit die maximal mögliche Beschleunigung des Fahrzeugs erreichen.

**Patentansprüche**

1.  Verfahren zum Betreiben einer Brennkraftmaschine (1) mit einem Abgasturbolader (5, 10, 15) zur Verdichtung der der Brennkraftmaschine (1) zugeführten Luft, wobei eine Antriebsleistung einer Turbine (10) des Abgasturboladers (5, 10, 15) in einem Abgasstrang (20) der Brennkraftmaschine (1) durch Variation einer Turbinengeometrie verändert wird, **dadurch gekennzeichnet, dass** ein Druckverhältnis zwischen einem Druck in Strömungsrichtung des Abgases im Abgasstrang (20) nach der Turbine (10) und einem Druck in Strömungsrichtung des Abgases im Abgasstrang (20) vor der Turbine (10) vorgegeben wird und dass in Abhängigkeit dieses Druckverhältnisses ein Grenzwert für eine Stellgröße eines Stellgliedes (25) zur Einstellung der Turbinengeometrie ermittelt wird, dass das vorgegebene Druckverhältnis beim Betrieb der Brennkraftmaschine (1) nicht unterschritten wird und dass der Grenzwert für die Stellgröße beim Betrieb der Brennkraftmaschine (1) nicht in Richtung zu kleineren effektiven Öffnungsquerschnitten der Turbine (10) überschritten wird.

2.  Verfahren nach Anspruch 1, **dadurch gekennzeichnet, dass** das Druckverhältnis auf einen Mindestwert vorgegeben wird, bei dem die Strömungsgeschwindigkeit des Abgases erstmalig Schallgeschwindigkeit erreicht, so dass eine maximale Beschleunigung eines von der Brennkraftmaschine (1) angetriebenen Fahrzeugs erreicht wird.

3.   Verfahren nach einem der vorherigen Ansprüche, **dadurch gekennzeichnet, dass** das Druckverhältnis auf einen Mindestwert vorgegeben wird, bei dem die Strömungsgeschwindigkeit des Abgases erstmalig Schallgeschwindigkeit erreicht, so dass ein optimaler Wirkungsgrad der Turbine (10) erreicht wird.

4.   Verfahren nach einem der vorherigen Ansprüche, **dadurch gekennzeichnet, dass** beim Betrieb der Brennkraftmaschine (1) der Grenzwert für die Stellgröße nicht in Richtung zu kleineren effektiven Öffnungsquerschnitten der Turbine (10) überschritten wird.

5.   Verfahren nach einem der vorherigen Ansprüche, **dadurch gekennzeichnet, dass** der Grenzwert für die Stellung des Stellgliedes (25) aus dem Abgasmassenstrom durch die Turbine (10) mittels einer invertierten und auf Normbedingungen bezogenen Durchflusskennlinie (30) ermittelt wird.

6.   Verfahren nach Anspruch 5, **dadurch gekennzeichnet, dass** die aktuellen Bedingungen für Druck, Temperatur und/oder Strömungsgeschwindigkeit durch jeweils einen Korrekturfaktor berücksichtigt werden.

7.   Verfahren nach Anspruch 6, **dadurch gekennzeichnet, dass** der Korrekturfaktor für die Strömungsgeschwindigkeit mittels einer Ausflusskennlinie (35) in Abhängigkeit eines Druckes vor und eines Druckes nach der Turbine (10) ermittelt wird.

8.   Vorrichtung (40) zum Betreiben einer Brennkraftmaschine (1) mit einem Abgasturbolader (5, 10, 15) zur Verdichtung der der Brennkraftmaschine (1) zugeführten Luft, wobei eine Antriebsleistung einer Turbine (10) des Abgasturboladers (5, 10, 15) in einem Abgasstrang (20) der Brennkraftmaschine (1) durch Variation einer Turbinengeometrie veränderbar ist, **dadurch gekennzeichnet, dass** eine Ermittlungseinheit (45) zur Ermittlung eines Grenzwertes für eine Stellgröße eines Stellgliedes (25) zur Einstellung der Turbinengeometrie in Abhängigkeit eines vorgegebenen Druckverhältnisses zwischen einem Druck in Strömungsrichtung des Abgases im Abgasstrang (20) nach der Turbine (10) und einem Druck in Strömungsrichtung des Abgases im Abgasstrang (20) vor der Turbine (10) vorgesehen ist, dass das vorgegebene Druckverhältnis beim Betrieb der Brennkraftmaschine (1) nicht unterschritten wird und dass der Grenzwert für die Stellgröße beim Betrieb der Brennkraftmaschine (1) nicht in Richtung zu kleineren effektiven Öffnungsquerschnitten der Turbine (10) überschritten wird.

**Claims**

1.   Method for operating an internal combustion engine (1) having an exhaust-gas turbocharger (5, 10, 15) for compressing the air supplied to the internal combustion engine (1), with a drive power of a turbine (10) of the exhaust-gas turbocharger (5, 10, 15) in an exhaust strand (20) of the internal combustion engine (1) being varied by varying a turbine geometry, **characterized in that** a pressure ratio between a pressure downstream of the turbine (10) in the flow direction of the exhaust gas in the exhaust strand (20) and a pressure upstream of the turbine (10) in the flow direction of the exhaust gas in the exhaust strand (20) is predefined, and **in that** a limit value for an actuating variable of an actuating element (25) for adjusting the turbine geometry is determined as a function of said pressure ratio, **in that** the predefined pressure ratio is not undershot during operation of the internal combustion engine (1), and **in that** the limit value for the actuating variable is not exceeded in the direction of excessively small effective opening cross sections of the turbine (10) during operation of the internal combustion engine (1).

2.   Method according to Claim 1, **characterized in that** the pressure ratio is predefined to a minimum value at which the flow speed of the exhaust gas first reaches the speed of sound, so that a maximum acceleration of a vehicle which is driven by the internal combustion engine (1) is obtained.

3.   Method according to one of the preceding claims, **characterized in that** the pressure ratio is predefined to a minimum value at which the flow speed of the exhaust gas first reaches the speed of sound, so that an optimum efficiency of the turbine (10) is obtained.

4.   Method according to one of the preceding claims, **characterized in that**, during operation of the internal combustion engine (1), the limit value for the actuating variable is not exceeded in the direction of excessively small effective opening cross sections of the turbine (10).

5.   Method according to one of the preceding claims, **characterized in that** the limit value for the positioning of the actuating element (25) is determined from the exhaust-gas mass flow through the turbine (10) by means of a throughflow characteristic curve (30) which is inverted and related to standard conditions.

6. Method according to Claim 5, **characterized in that** the present conditions for pressure, temperature and/or flow speed are taken into consideration by means of in each case one corrective factor.

7. Method according to Claim 6, **characterized in that** the corrective factor for the flow speed is determined by means of an outflow characteristic curve (35) as a function of a pressure upstream and a pressure downstream of the turbine (10).

8. Device (40) for operating an internal combustion engine (1) having an exhaust-gas turbocharger (5, 10, 15) for compressing the air supplied to the internal combustion engine (1), with it being possible to vary a drive power of a turbine (10) of the exhaust-gas turbocharger (5, 10, 15) in an exhaust strand (20) of the internal combustion engine (1) by varying a turbine geometry, **characterized in that** a determining unit (45) is provided for determining a limit value for an actuating variable of an actuating element (25) for adjusting the turbine geometry as a function of a predefined pressure ratio between a pressure downstream of the turbine (10) in the flow direction of the exhaust gas in the exhaust strand (20) and a pressure upstream of the turbine (10) in the flow direction of the exhaust gas in the exhaust strand (20), **in that** the predefined pressure ratio is not undershot during operation of the internal combustion engine (1), and **in that** the limit value for the actuating variable is not exceeded in the direction of excessively small effective opening cross sections of the turbine (10) during operation of the internal combustion engine (1).

## Revendications

1. Procédé de gestion d'un moteur à combustion interne (1) comportant un turbocompresseur de gaz d'échappement (5, 10, 15) pour comprimer l'air fourni au moteur à combustion interne (1),
   selon lequel, la puissance d'entraînement de la turbine (10) du turbocompresseur de gaz d'échappement (5, 10, 15) dans la veine des gaz d'échappement (20) du moteur à combustion interne (1) étant modifiée par variation de la géométrie de la turbine,
   **caractérisé en ce qu'**
   on prédéfinit le rapport des pressions entre une pression dans la direction d'écoulement des gaz d'échappement dans la veine des gaz d'échappement (20), après la turbine (10) et une pression dans le sens de passage des gaz d'échappement dans la conduite des gaz d'échappement (20) en amont de la turbine (10) et
   en fonction de ce rapport des pressions, on détermine une valeur limite pour une grandeur de réglage d'un organe d'actionnement (25) pour régler la géométrie de la turbine, pour que le rapport des pressions, prédéfini, ne soit pas dépassé vers le bas pendant le fonctionnement du moteur à combustion interne (1) et que la valeur limite de la grandeur de réglage ne soit pas dépassée en direction des petites sections d'ouverture efficaces de la turbine (10) pendant le fonctionnement du moteur à combustion interne (1).

2. Procédé selon la revendication 1,
   **caractérisé en ce que**
   le rapport de pressions est prédéfini par une valeur minimale pour laquelle la vitesse d'écoulement des gaz d'échappement atteint la première fois la vitesse du son, de sorte que l'on atteint l'accélération maximale du véhicule entraîné par le moteur à combustion interne (1).

3. Procédé selon l'une des revendications précédentes,
   **caractérisé en ce que**
   le rapport de pressions est prédéfini sur une valeur minimale pour laquelle la vitesse d'écoulement des gaz d'échappement atteint la première fois la vitesse du son de sorte que l'on a le rendement optimum de la turbine (10).

4. Procédé selon l'une des revendications précédentes,
   **caractérisé en ce que**
   pour le fonctionnement du moteur à combustion interne (1) on ne dépasse pas la valeur limite de la grandeur de réglage dans le sens d'une plus petite section d'ouverture effective de la turbine (10).

5. Procédé selon l'une des revendications précédentes,
   **caractérisé en ce qu'**
   on détermine la valeur limite de la position de l'organe d'actionnement (25) à partir du débit massique des gaz d'échappement à travers la turbine (10) à l'aide d'une courbe caractéristique de débit (30) inversée, rapportée aux conditions normales.

6. Procédé selon la revendication 5,
**caractérisé en ce qu'**
on tient compte des conditions actuelles de pression, température et/ ou vitesse d'écoulement par un coefficient de correction.

7. Procédé selon la revendication 6,
**caractérisé en ce qu'**
on détermine le coefficient de correction de la vitesse d'écoulement à l'aide d'une courbe caractéristique de flux (35) en fonction de la pression en amont de la turbine (10) et en aval de la turbine (10).

8. Dispositif (40) de gestion d'un moteur à combustion interne (1) comprenant un turbocompresseur de gaz d'échappement (5, 10, 15) pour comprimer l'air fourni au moteur à combustion interne (1), la puissance d'entraînement de la turbine (10) du turbocompresseur de gaz d'échappement (5, 10, 15) dans la conduite des gaz d'échappement (20) du moteur à combustion interne (1) se modifiant par variation de la géométrie de la turbine,
**caractérisé par**
une unité de détermination (45) pour déterminer une valeur limite d'une grandeur d'actionnement d'un organe d'actionnement (25) pour régler la géométrie de la turbine en fonction d'un rapport de pressions, prédéfini, entre une pression dans la direction d'écoulement des gaz d'échappement dans la conduite des gaz d'échappement (20) en aval de la turbine (10) et une pression dans la direction d'écoulement des gaz d'échappement dans la conduite des gaz d'échappement (20) en amont de la turbine (10), en ce qu'on ne dépasse pas vers le bas le rapport de pressions prédéfini dans le fonctionnement du moteur à combustion interne (1) et en ce qu'on ne dépasse pas vers le haut, la valeur limite de la grandeur d'actionnement pendant le fonctionnement du moteur à combustion interne (1), dans le sens d'une plus petite section d'ouverture efficace de la turbine (10).

Fig. 1

1

pabnav

msabg

Taikr

pntu

hatlsts

EP 1 471 234 B1

Fig. 2

EP 1 471 234 B1

**IN DER BESCHREIBUNG AUFGEFÜHRTE DOKUMENTE**

**In der Beschreibung aufgeführte Patentdokumente**

- WO 0204799 A1
- EP 1178112 A2